# FASCICULE DE BREVET EUROPEEN

(11) **EP 2 035 680 B1**
(45) Date de publication et mention de la délivrance du brevet: **03.01.2018**
(21) Numéro de dépôt: 07803962.5
(22) Date de dépôt: 28.06.2007
(51) Int. Cl.: F02K 3/06, F02K 1/09, F02K 1/34, F02K 1/32, F02K 1/30, F02K 1/28, F02K 1/72, F02K 1/70

(54) **Procédé visant à réduire, annuler ou inverser la poussée générée par au moins un flux d'air sortant d'une nacelle d'un ensemble propulsif d'un aéronef, et dispositif, nacelle et aéronef associés**
Verfahren zur Reduzierung, Unterdrückung oder Umkehr der durch eine Luftströmung aus dem Auslass einer Gondel einer Flugzeugtriebwerkanlage erzeugten Schubkraft, und zugehörige Vorrichtung, Gondel und Flugzeug
Methode for reducing, cancelling or reversing the thrust generated by at least an exit airflow exiting the nacelle of a propelling plant of an aircraft and corresponding device

(30) Priorité: 05.07.2006 FR 0606113; 05.01.2007 FR 0752545
(43) Date de publication de la demande: 18.03.2009
(73) Titulaire: Airbus Opérations SAS, 31060 Toulouse (FR)
(72) Inventeur: BULIN, Guillaume, 31700 Blagnac (FR); OBERLE, Patrick, 82600 Verdun Sur Garonne (FR); SURPLY, Thierry, 31700 Cornebarrieu (FR)
(74) Mandataire: Fantin, Laurent
(86) Numéro de dépôt international: PCT/FR2007/051553
(87) Numéro de publication internationale: WO 2008/003889

(56) Documents cités:
- FR-A- 1 479 705
- GB-A- 1 357 370
- US-A- 5 713 537

## Description

La présente invention se rapporte à un procédé pour réduire, annuler ou inverser la poussée produite par un ensemble propulsif d'un aéronef, à un dispositif pour sa mise en oeuvre ainsi qu'à une nacelle d'aéronef incorporant ledit dispositif.

Un ensemble propulsif comprend une nacelle sous forme d'un conduit dans lequel est disposée de manière sensiblement concentrique une motorisation, notamment une turbomachine, entraînant une soufflante montée sur son arbre.

La nacelle comprend à l'avant une entrée d'air, une première partie du flux d'air entrant, appelée flux primaire, traversant la motorisation pour participer à la combustion, la seconde partie du flux d'air, appelée flux secondaire, étant entrainée par la soufflante et s'écoulant dans un conduit annulaire délimité par la paroi intérieure de la nacelle et la paroi extérieure de la motorisation.

Ainsi, la poussée générée par l'ensemble propulsif, orientée sensiblement selon l'axe longitudinal de la nacelle, est produite par le flux d'air primaire éjecté par la motorisation et le flux d'air secondaire propulsé par la soufflante.

Il est connu de prévoir sur les nacelles d'un ensemble propulsif d'un aéronef des systèmes mécaniques pour inverser la poussée produite, et ce afin d'obtenir une décélération de l'aéronef.

Ce système permet de compenser l'action des freins lorsque l'adhérence au sol est réduite par exemple en présence de verglas, de moins solliciter les dispositifs de freinage ce qui permet de réduire la maintenance desdits dispositifs de freinage et de réduire la durée de la décélération ce qui permet de réduire le temps d'occupation de la piste d'atterrissage.

Le document GB-1.357.370, qui décrit les caractéristiques du préambule des revendications indépendantes 1 et 8, décrit un tel système mécanique pour inverser la poussée produite par un ensemble propulsif d'aéronef. Selon ce document, la nacelle est formée d'une partie avant et d'une partie arrière mobile en translation de manière à ménager entre les deux parties une ouverture.

Des déflecteurs tels que par exemple des volets ou des portes sont déployés dans le conduit annulaire en aval de l'ouverture afin de bloquer le flux secondaire et le dévier en direction de l'ouverture. Ainsi, ledit flux secondaire est évacué radialement en dehors de la nacelle via l'ouverture et ne participe plus à la poussée ce qui se traduit par une décélération.

Selon d'autres variantes, un ou plusieurs déflecteurs peuvent être prévus pour dévier le flux secondaire et/ou le flux primaire.

En complément, des moyens pour orienter le flux d'air dévié peuvent être prévus à l'extérieur de la nacelle. Ces moyens permettent d'orienter la résultante, selon l'axe longitudinal de la nacelle, générée par le flux dévié susceptible de s'opposer à la poussée et d'engendrer une décélération plus ou moins importante.

Selon un premier mode de réalisation, on peut obtenir cet effet en inclinant plus ou moins les déflecteurs.

Selon un mode de réalisation illustré par le document GB-1.357.370, on utilise l'effet Coanda,

Ainsi, de l'air sous pression peut être injecté via des orifices ménagés sur la surface extérieure de la nacelle à l'avant de l'ouverture pour orienter le flux d'air dévié vers l'avant ou à l'arrière de l'ouverture pour orienter le flux vers l'arrière. Avantageusement, l'air sous pression peut être prélevé au niveau du compresseur de la turbomachine et acheminé par des conduits jusqu'aux orifices ménagés au niveau de la surface extérieure de la nacelle.

Selon ce document, l'effet Coanda est utilisé seulement pour orienter le flux dévié mais ne participe pas à la déviation du flux d'air qui est obtenue par des obstacles mécaniques.

Ce type d'inverseur utilisant au moins un obstacle mécanique ne donne pas pleinement satisfaction pour les raisons suivantes :
Les déflecteurs utilisés pour dévier le flux d'air ainsi que les organes pour les manoeuvrer sont dimensionnés pour supporter les sollicitations susceptibles d'être générées lors d'une ouverture intempestive avec une poussée maximale ce qui conduit à augmenter la masse embarquée et à pénaliser l'aéronef en terme de consommation énergétique.

Les déflecteurs et les organes de manoeuvre sont relativement complexes, ce qui conduit à accroitre la maintenance et la durée d'immobilisation au sol.

Ces pièces mobiles déflecteurs/organes de manoeuvre sont généralement incompatibles avec des revêtements acoustiques, si bien que la superficie de surfaces traitées de manière acoustique est réduite.

Enfin, ces déflecteurs ne doivent pas se déployer durant le vol de manière intempestive si bien qu'il est nécessaire de prévoir un ou plusieurs systèmes de sécurité qui augmentent la masse embarquée et la maintenance, pénalisant l'aéronef en matière de consommation énergétique et de temps d'exploitation. Aussi, la présente invention vise à pallier aux inconvénients de l'art antérieur en proposant un procédé permettant de réduire, d'annuler ou d'inverser la poussée générée par un ensemble propulsif d'un aéronef de conception simple, permettant de réduire la masse embarquée et la maintenance afin de diminuer la consommation énergétique et la durée d'immobilisation au sol de l'aéronef.

A cet effet, l'invention est définie dans les revendications adjointes, a pour objet un procédé visant à réduire, annuler ou inverser la poussée générée par au moins un flux d'air sortant d'un ensemble propulsif d'un aéronef en déviant au moins une partie du flux susceptible de participer à la poussée, caractérisé en ce qu'il consiste à injecter au niveau de l'ensemble propulsif un fluide appelé fluide d'inversion de poussée pour dévier par entraînement, depuis l'intérieur de la nacelle en direction de l'extérieur de la nacelle, au moins une partie du flux susceptible de participer à la poussée.

Ainsi, contrairement à l'art antérieur, on obtient un système d'inversion de poussée de type fluidique et non basé sur au moins un obstacle susceptible d'être disposé dans un conduit afin de dévier une partie du flux.

D'autres caractéristiques et avantages ressortiront de la description qui va suivre de l'invention, description donnée à titre d'exemple uniquement, en regard des dessins annexés sur lesquels :
- la figure 1A est une représentation schématique selon une demi coupe longitudinale d'un ensemble propulsif d'un aéronef selon l'invention l'inversion de poussée étant inactive,
- la figure 1B est une représentation schématique selon une demi coupe longitudinale d'un ensemble propulsif d'un aéronef selon l'invention l'inversion de poussée étant active,
- la figure 2 est une représentation illustrant les différents flux lors de la diminution, l'annulation ou l'inversion de poussée, en l'occurrence une diminution de poussée dans l'exemple présenté,
- la figure 3 est une coupe longitudinale d'un ensemble propulsif d'un aéronef selon l'invention, en partie supérieure dans un état repos, en partie inférieure dans un état actif,
- la figure 4 est une vue schématique illustrant en détails un dispositif fluidique selon un mode de réalisation,
- la figure 5 est une perspective d'une nacelle d'un aéronef selon un deuxième mode de réalisation,
- les figures 6A et 6B sont des coupes illustrant en détails le dispositif de l'invention selon la variante de la figure 5, respectivement à l'état repos et à l'état actif,
- les figures 7A à 7C sont des coupes illustrant en détails un dispositif pour inverser la poussée selon une autre variante de l'invention, respectivement à l'état repos, dans une position intermédiaire et à l'état actif,
- la figure 8 est une coupe longitudinale d'un ensemble propulsif d'un aéronef selon une autre variante de l'invention, en partie supérieure à l'état repos, en partie inférieure à l'état actif,
- la figure 9 est une coupe longitudinale d'un ensemble propulsif d'un aéronef selon une autre variante de l'invention, en partie supérieure à l'état repos, en partie inférieure à l'état actif,
- la figure 10 est une vue en perspective d'un ensemble propulsif illustrant une autre variante de l'invention,
- la figure 11 est une vue en coupe selon le plan A de la figure 10 d'une partie d'une nacelle illustrant en détails la variante de l'invention représentée sur la figure 10,
- la figure 12 est une vue en perspective d'un volet utilisé pour la variante de la figure 10,
- la figure 13 est une coupe longitudinale d'un ensemble propulsif d'un aéronef selon une autre variante de l'invention, en partie supérieure à l'état repos, en partie inférieure à l'état actif, et
- la figure 14 est une coupe longitudinale d'un ensemble propulsif d'un aéronef selon une autre variante de l'invention, à l'état actif.

Un ensemble propulsif pour un aéronef comprend une nacelle 12 dans laquelle est disposée de manière sensiblement concentrique une motorisation telle qu'un réacteur 14.

Ainsi, un aéronef peut comprendre un ou plusieurs ensembles propulsifs fixés au niveau de la voilure ou directement au fuselage, soit de part et d'autre du fuselage, soit sur la partie supérieure arrière du fuselage.

Un réacteur 14, d'axe longitudinal X, installé à l'intérieur de la nacelle comprend une turbomachine 16 comportant en entrée, du côté amont (à gauche sur la figure), un arbre 18 sur lequel sont montées les pales 20 d'une soufflante 22.

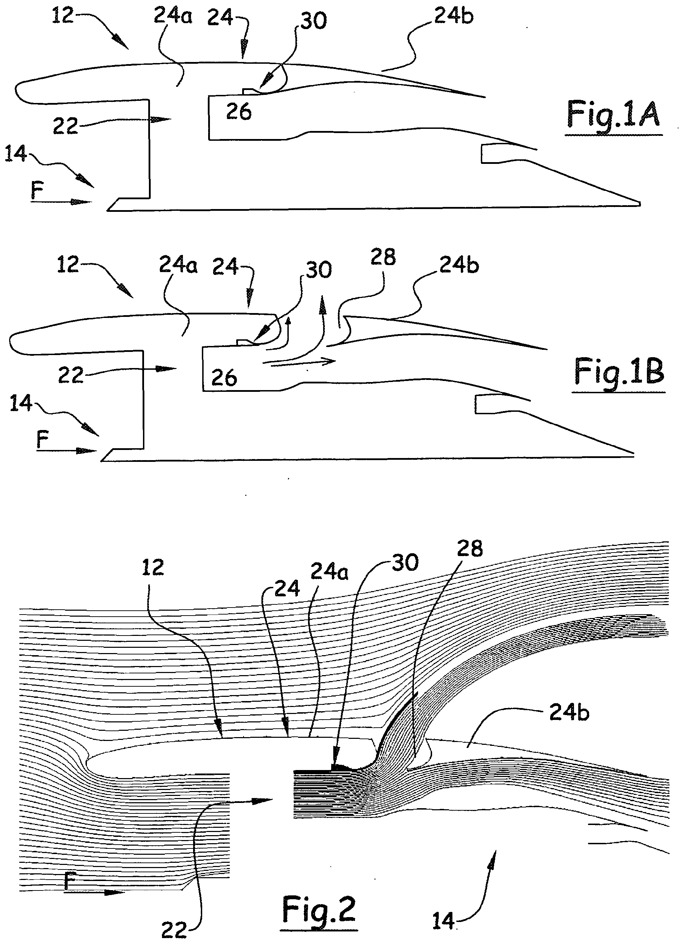

La nacelle 12 entoure le réacteur 14 précité dans sa partie amont, tandis que sa partie aval fait saillie par rapport à la partie aval de la nacelle comme représenté partiellement sur la figure 1.

Plus particulièrement, la nacelle 12 comporte une paroi 24 qui entoure de façon concentrique le réacteur de façon à ménager avec ce dernier un conduit annulaire 26 dans lequel s'écoule un fluide qui, ici, est de l'air.

L'air, symbolisé par la flèche F arrivant en entrée de la nacelle, pénètre à l'intérieur de celle-ci et un premier flux, appelé flux primaire, pénètre dans la turbomachine 16 pour participer à la combustion et entraîner l'arbre 18 et donc la soufflante 22 en rotation.

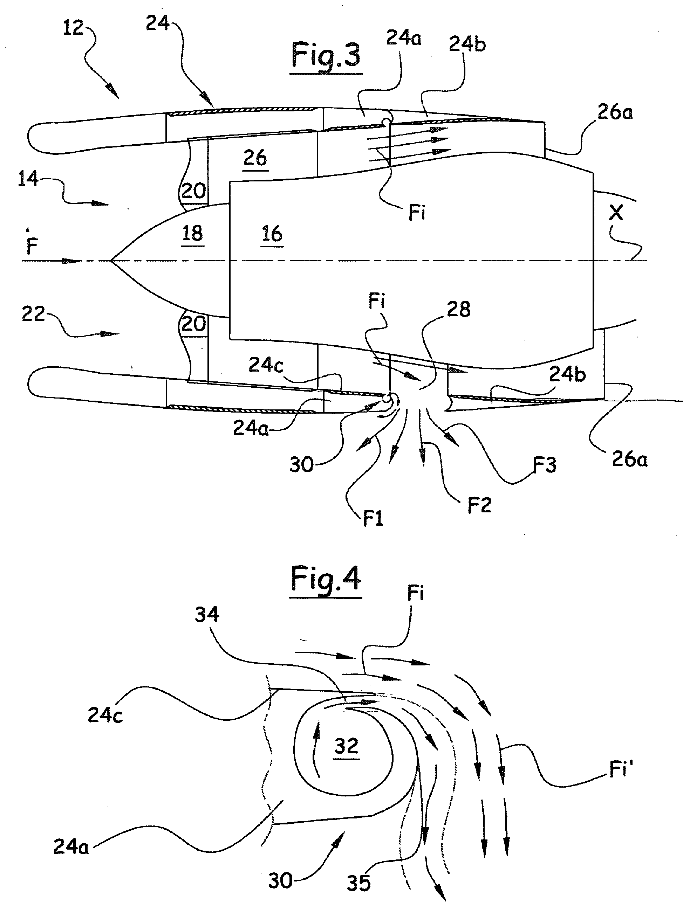

De cette façon, un deuxième flux d'air, appelé flux secondaire, propulsé par la soufflante, emprunte le conduit annulaire 26 et s'échappe par la partie aval de la nacelle, constituant avec le flux primaire ainsi la poussée du système propulsif. Selon un mode de réalisation, la paroi 24 de la nacelle est réalisée en deux parties, une partie dite amont 24a et une partie dite aval 24b incluant le bord de fuite de la paroi de la nacelle et qui est mobile par rapport à la première partie. Comme représenté sur la figure 3, la seconde partie 24b est représentée en partie haute de cette figure, dans une première position dite repliée et pour laquelle l'écoulement interne au conduit annulaire 26 traverse ce dernier jusqu'à son extrémité débouchante 26a.

En partie basse de la figure 3, on a représenté la partie aval ou arrière 24b dans une deuxième position dite déployée pour laquelle une ouverture 28 est créée dans la paroi 24. Cette ouverture est aménagée entre les parties amont 24a et aval 24b à la périphérie externe du conduit annulaire 26.

Il convient de noter que la partie aval 24b de la paroi de la nacelle peut être constituée de plusieurs portions dont la réunion forme un anneau complet et qui peuvent se déplacer chacune de façon indépendante.

Le déplacement vers l'aval de chaque portion crée ainsi une ouverture différente dans la paroi de la nacelle.

Dans l'exemple de réalisation représenté sur la figure 3, la partie aval 24b de la paroi de la nacelle se déplace sur commande (par exemple à partir d'un signal envoyé du poste de pilotage), par translation (par exemple sous l'action de vérins hydrauliques montés dans la partie de paroi 24a, parallèlement à l'axe X), de la position repliée à la position déployée pour créer une ou plusieurs ouvertures annulaires ou semi-annulaires dans la paroi.

On notera que ce mécanisme de création d'ouvertures n'obstrue pas le conduit longitudinal annulaire 26 et une partie de l'écoulement interne de fluide circulant dans ce passage peut continuer à s'échapper par l'extrémité 26a.

On notera que la partie amont 24a et la partie aval 24b de la paroi de la nacelle présentent au niveau de leurs zones destinées à entrer en contact l'une avec l'autre des formes complémentaires, à savoir, par exemple, une forme convexe pour la partie 24a et une forme concave pour la partie 24b afin que l'ensemble constitué des deux parties soit jointif lorsqu'elles sont en contact l'une avec l'autre (partie haute de la figure 3).

Selon l'invention, on injecte au niveau de l'ensemble propulsif un fluide dit fluide d'inversion de poussée pour dévier au moins une partie du flux secondaire à l'extérieur de la nacelle, selon une direction radiale, afin que ledit flux dévié ne participe pas à la poussée produite par l'ensemble propulsif afin d'obtenir une décélération.

Contrairement à l'art antérieur, on obtient une inversion de poussée de type fluidique et non basé sur au moins un obstacle susceptible d'être disposé dans un conduit afin de dévier une partie du flux.

Selon l'invention, la déviation d'au moins une partie du flux utilisé pour la poussée est obtenue par un effet d'entraînement de ladite partie du flux par le fluide d'inversion de poussée, notamment grâce à un effet Coanda.

Ainsi, contrairement à l'art antérieur, on utilise l'effet Coanda pour initier la déviation d'une partie du flux utilisé pour la poussée.

De préférence, on injecte un fluide d'inversion de poussée au niveau d'au moins une partie d'un bord de fuite ou légèrement en amont dudit bord de fuite pour obtenir un effet Coanda et aspirer et dévier au moins une partie du flux utilisé pour la poussée.

A titre d'exemple, on a représenté sur la figure 2 les différents flux. Selon l'invention, il est possible de dévier de l'ordre de 60% du flux secondaire par un effet d'entraînement par le fluide d'inversion de poussée. Ainsi, avec un flux secondaire ayant un débit de l'ordre de 800 Kg/s en amont de l'inverseur de poussée et un fluide d'inversion de poussée ayant un débit de l'ordre de 70 Kg/s, on peut mesurer un débit de l'ordre de 550 Kg/s pour le flux dévié.

Le fluide d'inversion de poussée peut être injecté de manière ponctuelle avec un ou plusieurs points d'injection répartis au niveau du bord de fuite ou de manière linéaire sur une portion ou plusieurs portions du bord de fuite.

Ce bord de fuite peut être le bord de fuite de l'extrémité du conduit canalisant le flux secondaire et/ou du conduit canalisant le flux primaire ou celui d'un bord amont d'une ouverture prévue au niveau du conduit canalisant le flux secondaire et/ou du conduit canalisant le flux primaire.

Ainsi, la présente invention n'est pas limitée à la déviation du flux secondaire mais peut s'appliquer également au flux primaire.

De même, la déviation d'une partie du flux afin qu'il ne participe plus à la poussée peut être réalisée via une ouverture susceptible d'être créée au niveau d'un conduit ou à l'extrémité d'un conduit.

De plus, l'injection du fluide d'inversion de poussée peut être disposée au niveau du bord de fuite ou de manière décalée en amont ou en aval dudit bord de fuite. Avantageusement, le fluide d'inversion de poussée est injecté via une sortie en forme de tuyère. Ce fluide est de préférence prélevé au niveau du compresseur du réacteur.

Par inversion de pousser, on entend par la suite la réduction, l'annulation ou l'inversion de la poussée.

Lors de la réduction de la poussée au moins une partie du fluide susceptible de participer à la poussée est déviée selon une direction faisant un angle aigu avec la direction de poussée. Dans ce cas, l'ensemble propulsif génère une poussée orientée vers l'arrière.

Pour l'annulation de la poussée, la résultante du flux dévié est égale à la résultante du flux non dévié. Dans ce cas, l'ensemble propulsif génère une poussée quasi nulle.

Pour l'inversion de poussée, la résultante du flux dévié est supérieure à celle du flux non dévié, dans ce cas l'ensemble propulsif génère une poussée orientée vers l'avant.

De préférence, on peut ajuster le ratio entre le débit du flux dévié et le débit du flux non dévié en ajustant au moins un paramètre aérodynamique ou thermodynamique du fluide d'inversion de poussée, tel que par exemple la vitesse d'injection du fluide d'inversion de poussée.

Dans la mesure où les moyens pour dévier une partie du flux d'air ne sont pas un obstacle mécanique et ne comprennent aucun moyen pour les manoeuvrer, le système d'inversion de poussée est largement simplifié.

Par ailleurs, ce système permet de réduire fortement la masse embarquée et donc la consommation de l'aéronef.

Par ailleurs, même lorsque des parties de la nacelle coulissent en translation, le nombre de pièces en mouvement est relativement faible ce qui permet de réduire la maintenance et la durée d'immobilisation au sol de l'aéronef.

Enfin, ce système d'inversion de poussée permet d'élargir les surfaces traitées de manière acoustique et de les étendre jusqu'aux zones de la nacelle dédiées à l'inversion de poussée.

Selon les variantes, on peut utiliser des moyens pour orienter le flux dévié soit vers l'avant de la nacelle, soit vers l'arrière. A cet effet, on peut utiliser comme pour l'art antérieur des conduits débouchant au niveau de la surface extérieure de la nacelle, en amont et en aval de l'ouverture pour orienter le flux dévié. Ainsi, lorsqu'on injecte de l'air via l'orifice disposé en amont de l'ouverture, on oriente le flux d'air dévié selon une direction oblique vers l'avant de la nacelle alors que lorsqu'on injecte l'air via l'orifice disposé en aval de l'ouverture, on oriente le flux dévié selon une direction oblique vers l'arrière de la nacelle.

De préférence, les moyens pour dévier au moins une partie du flux susceptible de participer à la poussée sont également utilisés pour orienter ledit flux dévié. Ces moyens sont appelés par la suite dispositif fluidique.

A cet effet, le bord de fuite comprend en amont et/ou en aval de l'ouverture radiale de la nacelle une surface courbe, de préférence convexe, sur laquelle est injecté le fluide d'inversion de poussée. A titre d'exemple, la sortie du fluide d'inversion de poussée étant disposée sensiblement au niveau de l'arête formée par l'intersection de la surface intérieure du conduit de la nacelle et le chant de l'ouverture, la surface courbe convexe comprenant une partie sommitale décalée vers l'arrière par rapport à la sortie du fluide d'inversion de poussée.

Ainsi, en fonction des paramètres aérodynamiques et thermodynamiques du fluide d'inversion de poussée, des caractéristiques du bord de fuite en amont et/ou en aval de l'ouverture radiale (forme, état de surface,...), des caractéristiques du flux d'air s'écoulant à l'extérieur de la nacelle, ce dernier peut rester plus ou moins longtemps en contact avec la surface courbe prévue au niveau du chant du bord de fuite.

Si le point de décollement est disposé après la partie sommitale et si les paramètres aérodynamiques et thermodynamiques du fluide d'inversion de poussée sont adéquats, alors le flux dévié est orienté selon une direction oblique vers l'avant de la nacelle (référencée F1 sur la figure 3). Dans ce cas, si la résultante du flux dévié selon l'axe de poussée X est supérieure à la résultante du flux non dévié, on obtient une inversion de poussée, la poussée générée par l'ensemble propulsif étant dirigée vers l'avant.

Si le point de décollement est disposé sensiblement au niveau de la partie sommitale et si les paramètres aérodynamiques et thermodynamiques du fluide d'inversion de poussée sont adéquats, alors le flux dévié est orienté selon une direction radiale (référencée F2 sur la figure 3). Dans ce cas, si le flux participant à la poussée est entièrement dévié alors on obtient une poussée sensiblement nulle ou dans le cas contrairement une réduction de la poussée.

Si le point de décollement est disposé avant la partie sommitale et si les paramètres aérodynamiques et thermodynamiques du fluide d'inversion de poussée sont adéquats, alors le flux dévié est orienté selon une direction oblique vers l'arrière de la nacelle (référencée F3 sur la figure 3). Dans ce cas, on obtient une réduction de poussée.

Sur les différentes figures, on a représenté différents modes de réalisation.

Un dispositif fluidique 30 est prévu dans la paroi de la nacelle pour contrôler le prélèvement d'une quantité ou fraction d'écoulement interne au conduit 26 pour l'évacuer hors de la nacelle par l'ouverture radiale 28. Cependant l'invention n'est pas limitée à ce mode de réalisation, le dispositif fluidique pourrait ne pas permettre de contrôler la quantité ou fraction de l'écoulement prélevé.

Comme représenté sur la figure 3 (et de façon plus détaillée sur la figure 4), le dispositif fluidique 30 de prélèvement contrôlé est agencé dans la paroi de la nacelle, plus particulièrement dans la partie fixe 24a située en amont de l'ouverture 28.

Le dispositif 30 est agencé sur la face interne 24c de la paroi 24a de la nacelle, cette face interne délimitant le conduit annulaire 26 à sa périphérie externe.

Le dispositif 30 permet d'injecter dans l'écoulement interne Fi un fluide à haute énergie.

Cette injection de fluide est effectuée de façon sensiblement tangentielle à la face interne 24c dans une zone de l'écoulement où celui-ci doit être dévié, c'est-à-dire légèrement en amont du bord de fuite de la partie 24a.

Plus particulièrement, le dispositif fluidique 30 comporte un canal d'amenée d'un fluide, qui est par exemple de l'air sous pression provenant du réacteur.

Ce canal d'amenée de fluide comporte une partie non représentée qui communique avec la source d'air sous pression de la turbomachine 26 et une partie annulaire 32 partiellement représentée en coupe sur la figure 3. Ce canal 32 s'étend à la périphérie externe du conduit annulaire 26 et est réalisé sous la forme d'un ou de plusieurs arcs de tore ou bien d'un tore complet agencé sur la face interne 24c de la paroi de la nacelle.

Le dispositif fluidique 30 comporte en outre une ou plusieurs tuyères d'injection 34 qui communiquent avec le canal 32 et débouchent sur la face interne 24c, permettant ainsi d'injecter dans l'écoulement de fluide interne Fi au conduit 26 un fluide à haute énergie à proximité de l'ouverture 28 (figure 4).

Une surface incurvée 35 qui constitue le bord de fuite de la paroi amont 24a est aménagée à la sortie de la tuyère d'injection 34, tangentiellement à cette dernière. Selon une coupe longitudinale (figure 4), cette surface est par exemple en forme de demi-cercle.

On notera que, lorsque le canal est réalisé sous la forme de sections toriques (arcs de tore) ou bien d'un tore complet, la tuyère peut prendre la forme d'une fente et s'étendre suivant toute la longueur de la section de tore ou du tore complet.

Pour une même section de tore ou pour le tore complet, il est également possible d'avoir plusieurs tuyères d'injection disjointes réparties sur la section considérée ou sur le tore.

Comme représenté sur les figures 3 et 4, le fluide sous pression véhiculé par le canal 32 est introduit sous la forme d'un jet dans l'écoulement interne de fluide Fi par la tuyère d'injection 34, tangentiellement à la face interne 24c, et modifie ainsi de façon contrôlée une fraction de cet écoulement.

Le jet ainsi injecté sort de la tuyère avec une orientation donnée tangentiellement à un bord de fuite incurvé qui est ici la surface 35, puis épouse la forme du bord de fuite, comme représenté sur la figure 4, dans la mesure où la force centrifuge qui tend à l'en décrocher est équilibrée par la dépression apparaissant entre la paroi et le jet.

Le jet de fluide injecté est donc dévié par la surface incurvée 35.

Lorsque l'équilibre est rompu, le jet injecté dans l'écoulement se décroche du bord de fuite et forme au point de séparation le point d'arrêt arrière du profil. Comme représenté sur la figure 4, une partie F'i de l'écoulement interne de fluide Fi est déviée de sa trajectoire sous l'action du jet injecté à travers la tuyère d'injection 34 et qui est dévié par la surface 35.

L'apport d'énergie du fluide injecté par la tuyère d'injection 34 permet de contrôler la position du point de séparation.

On notera que l'on contrôle la direction du jet de fluide injecté en faisant varier la position du point de séparation du jet sur la surface 35.

Ainsi, en fonction de la zone de la surface 35 où le jet se détache on oriente différemment la partie F'i d'écoulement prélevé.

Ce point de détachement du jet de fluide, c'est-à-dire l'orientation du jet, varie en fonction d'au moins un des paramètres thermodynamiques et aérodynamiques du fluide, à savoir par exemple la pression et/ou la température et/ou le débit et/ou la vitesse et/ou le taux de turbulence...

A titre d'exemple, en augmentant le débit et la pression du fluide inducteur, le jet de fluide adhère à la surface 35 sur une grande longueur et l'écoulement prélevé F'i est dévié vers l'amont de la nacelle suivant la direction F1 sur la figure 3 (inversion de poussée).

Lorsque la direction donnée à la quantité de fluide prélevée est sensiblement celle indiquée par la flèche F2, à savoir de façon radiale par rapport à l'écoulement longitudinal Fi, alors on annule la poussée directe de l'écoulement prélevé.

En outre, lorsque la quantité d'écoulement interne de fluide prélevée F'i est orientée suivant la direction représentée par la flèche F3, c'est-à-dire vers l'aval de la nacelle, alors on réduit la poussée directe produite par l'écoulement prélevé.

On notera que l'on peut modifier un seul des paramètres thermodynamiques et aérodynamiques, par exemple le débit, pour agir sur la quantité de fluide prélevée.

Selon le mode de réalisation précédemment décrit, on note que les moyens permettant de dévier au moins une partie du flux susceptible de participer à la poussée assurent également la fonction d'orientation du flux dévié afin d'ajuster l'inversion de poussée et la décélération. Ainsi, pour moduler l'inversion de poussée, on peut ajuster au moins l'un des critères correspondant au ratio entre le flux dévié et le flux non dévié, l'orientation du flux dévié en ajustant au mois un des paramètres thermodynamiques et aérodynamiques du fluide d'inversion de poussée.

En faisant varier la taille de l'orifice d'injection en sortie de la tuyère d'injection, par exemple, grâce à un agencement de type diaphragme, on peut faire varier la vitesse d'injection et donc le débit du fluide injecté.

Par ailleurs, l'injection de fluide peut être réalisée soit en flux continu, soit en flux pulsé pour limiter la consommation de fluide injecté.

La réalisation d'un système efficace permettant d'inverser, d'annuler ou de diminuer le vecteur de poussée du système propulsif est réalisée durant certaines phases de vol de l'aéronef en translatant la partie arrière de la paroi de la nacelle. On dégage ainsi une ou plusieurs ouvertures 28 sur le flanc de la nacelle entre le flux secondaire Fi circulant dans le conduit annulaire 26 et l'atmosphère.

Il convient de remarquer que lorsque la partie arrière de la paroi de la nacelle a été déplacée vers l'arrière, la tuyère de sortie du flux secondaire ne réunit plus les conditions adaptées à la génération d'un vecteur de poussée d'une grande intensité.

En effet, la tuyère forme alors un divergent et le flux secondaire qui est un écoulement subsonique perd son énergie en sortant de la nacelle.

Le dispositif d'inversion, d'annulation ou de diminution de poussée selon l'invention est plus simple que les systèmes connus dans la mesure où, ici, on peut ne prévoir qu'une pièce mobile, la partie arrière de la paroi de la nacelle, ce qui simplifie considérablement la cinématique du dispositif.

Les efforts aérodynamiques liés au fonctionnement du dispositif selon l'invention se concentrent principalement sur le dispositif fluidique 30 agencé de façon annulaire sur la paroi de la nacelle, ce qui permet de mieux répartir dans la structure de la nacelle les efforts à transmettre et, ainsi, de ne pas avoir à surdimensionner certaines parties de la nacelle.

En outre, le dispositif fluidique a tendance à masquer la paroi aval 24b vis-à-vis de l'écoulement environnant, ce qui permet de ne pas avoir à surdimensionner cette dernière.

Par ailleurs, l'intégration du dispositif fluidique sur la paroi de la nacelle n'a que très peu d'influence sur le traitement acoustique interne et externe de cette dernière.

En effet, dans la position repliée représentée en partie haute de la figure 3, le dispositif selon l'invention autorise l'intégration d'un revêtement acoustique pariétal sur la quasi-totalité des faces interne et externe de la paroi de la nacelle.

En outre, la taille du dispositif fluidique 30 est relativement petite ce qui facilite son intégration dans cette dernière.

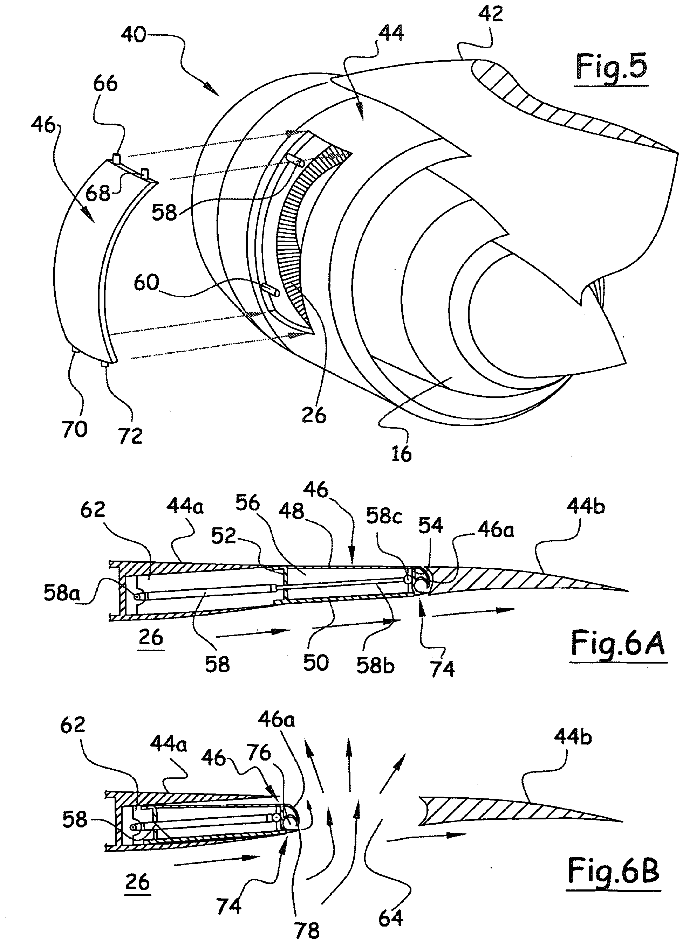

Les figures 5, 6A et 6B illustrent une nacelle de réacteur 40 selon un deuxième mode de réalisation de l'invention.

Une nacelle 40 est fixée à la voilure de l'aéronef par l'intermédiaire d'un mât de pylône 42 partiellement représenté. Cette nacelle comprend une paroi de nacelle 44 entourant de façon concentrique la partie amont de la turbomachine 16 reliée à la soufflante 22, toutes deux étant représentées sur la figure 3.

Dans ce mode de réalisation, le mécanisme de création d'ouverture(s) dans la paroi de nacelle 44 diffère de celui représenté sur la figure 3.

En effet, dans ce deuxième mode de réalisation, la partie de la paroi de la nacelle qui est apte à se déplacer longitudinalement suivant la direction longitudinale du conduit annulaire 26 constitue une partie intermédiaire 46 de cette paroi. Sur la figure 5, cette partie intermédiaire a été retirée pour faire apparaître l'ouverture pour la déviation contrôlée de flux.

Cette partie 46 s'étend suivant un secteur angulaire de la paroi annulaire 44 de nacelle et une autre partie intermédiaire, non représentée, peut également être agencée de façon symétrique par rapport au mât de pylône 42 afin de ménager une autre ouverture dans la paroi de nacelle.

On notera que la partie intermédiaire de paroi rétractable 46 peut également s'étendre suivant toute la périphérie de la nacelle.

La partie intermédiaire de paroi 46 comprend deux panneaux 48, 50 (figure 6A) qui sont maintenus radialement écartés l'un de l'autre par deux panneaux formant traverses 52 et 54 et qui sont disposés sensiblement perpendiculairement aux panneaux 48 et 50.

Un espace 56 de dimensions fixes est ainsi ménagé entre les panneaux longitudinaux 48 et 50 qui sont respectivement en contact, dans la position de la figure 6A, avec l'extérieur de la nacelle et avec le conduit annulaire 26.

Un ou plusieurs vérins, par exemple deux vérins 58 et 60, sont disposés longitudinalement à l'intérieur de la paroi de la nacelle.

Plus particulièrement, comme représenté sur la figure 6A, le vérin 58 (tout comme le vérin 60) est disposé pour partie à l'intérieur d'un logement 62 aménagé dans la partie amont 44a de la nacelle.

Le logement 62 est agencé au moins de façon à s'étendre suivant le secteur angulaire correspondant de la pièce mobile 46.

La partie fixe du vérin 58 est fixée par une extrémité 58a au fond du logement 62, tandis que la tige mobile 58b du vérin s'étend à l'intérieur de la pièce intermédiaire 46 et est fixée par une extrémité opposée 58c à la traverse 54 (figure 6A).

Dans la première position représentée sur la figure 6A, la partie intermédiaire de paroi 46 est agencée entre deux parties fixes 44a (partie amont) et 44b (partie aval) de la paroi de la nacelle.

La partie intermédiaire 46 comporte dans sa partie aval un bord de fuite arrondi 46a qui s'étend sensiblement de l'extrémité de la paroi 46 fixée à la traverse 54 jusqu'à l'extrémité de la paroi 50 également fixée à cette traverse.

En position étendue de la paroi intermédiaire 46, ce bord de fuite 46a épouse une concavité de forme correspondante du bord d'attaque de la partie de paroi aval 44b (figure 6A).

En position rétractée, le bord de fuite fait saillie en dehors du logement 62 (figure 6B).

On notera que, lorsque la rétractation des vérins est commandée, les tiges de ces derniers se rétractent à l'intérieur du corps des vérins correspondants et ramènent ainsi la partie intermédiaire 46 au moins en partie à l'intérieur du logement 62, comme représenté sur la figure 6B.

La paroi intermédiaire 46 ainsi rétractée permet de dégager une ouverture 64 dans la paroi de la nacelle entre son bord de fuite 46a et le bord d'attaque de la partie aval 44b. On notera par ailleurs que des galets supérieurs 66, 68 et inférieurs 70, 72 sont fixés en partie haute et en partie basse respectivement de la pièce 46 (figure 5). Ces galets coulissent à l'intérieur de rails supérieurs et inférieurs respectifs, non représentés, pour guider le mouvement de rétractation et de déploiement de la partie intermédiaire 46 sollicitée par les vérins 58 et 60.

La partie intermédiaire de paroi 46 comporte également un dispositif fluidique 74 analogue au dispositif 30 des figures 3 et 4 et qui a pour fonction de prélever une partie de l'écoulement de fluide interne au conduit 26 en contrôlant la quantité de fluide prélevée et l'orientation spatiale donnée à cette dernière.

Tout comme le dispositif 30 précité, le dispositif 74 est aménagé sur la face interne de la partie de paroi 46 et comporte un canal d'amenée de fluide à haute énergie 76 réalisé sous la forme d'un arc de tore.

Le dispositif 74 comporte également un orifice d'injection de ce fluide de façon tangentielle à l'écoulement interne au conduit 26. Cet orifice est réalisé sous la forme d'une fente 78 s'étendant suivant toute la longueur du canal 76.

Le dispositif 74 est également alimenté, par exemple, en air sous pression provenant de la turbomachine 16 par l'intermédiaire d'un tuyau flexible ou d'une jonction pneumatique télescopique (non représenté), tout comme le dispositif 30 des figures 3 et 4.

Les caractéristiques et fonctionnalités du dispositif 74 sont identiques à celles du dispositif 30 et ne seront donc pas reprises ici.

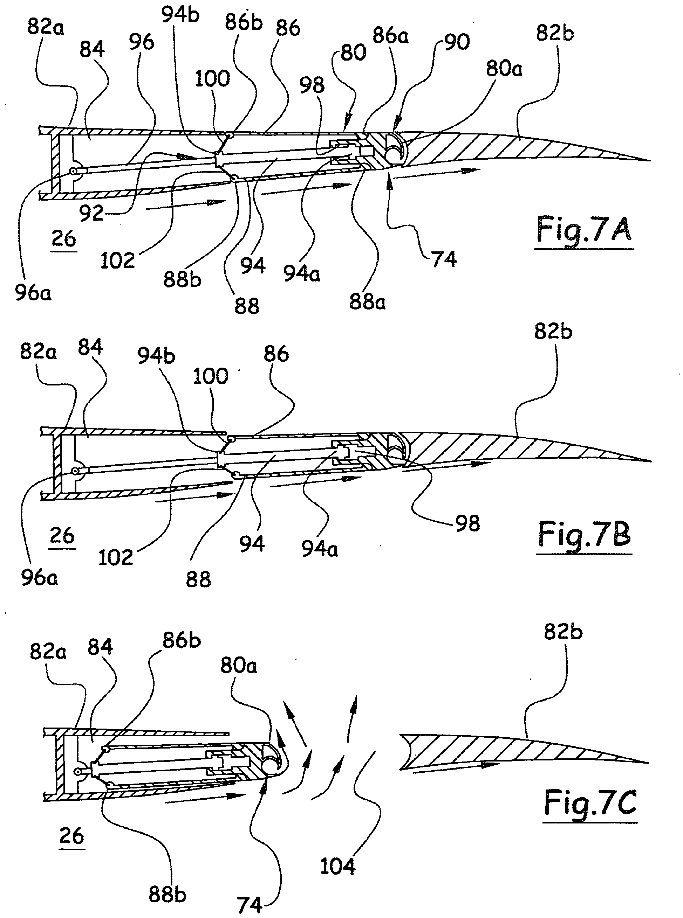

Les figures 7A à 7C illustrent une variante de réalisation d'une partie intermédiaire de paroi de nacelle rétractable 80.

La partie intermédiaire 80 est agencée, comme représenté sur la figure 7A, entre deux parties de paroi fixes 82a (partie amont) et 82b (partie aval) de la paroi de la nacelle.

La partie amont 82a présente un logement interne 84 prévu pour recevoir au moins une partie de la partie intermédiaire 80 lorsque celle-ci est en position rétractée comme représenté sur la figure 7C.

La partie déplaçable longitudinalement 80 comporte deux panneaux 86, 88 radialement écartés l'un de l'autre (figure 7A), mais dont l'écartement peut varier à la différence du mode de réalisation des figures 5, 6A et 6B.

Les deux panneaux 86 et 88 sont respectivement articulés par une de leur extrémité dite aval 86a, 88a sur un support aval 90 comportant un bord de fuite arrondi 80a et le dispositif fluidique 74 identique à celui du mode de réalisation des figures 5, 6A et 6B.

Un vérin 92 comporte un corps 94 et une tige 96 agencés à l'intérieur de la paroi de nacelle.

Le corps 94 présente à une extrémité dudit corps une tête 94a qui est logée à l'intérieur d'une cavité 98 solidaire du support 90 et qui s'étend dans l'espace interne délimité par les deux panneaux 86, 88.

Le corps 94 est assujetti à son extrémité opposée 94b aux extrémités dites amont 86b, 88b des panneaux 86 et 88 par l'intermédiaire de deux biellettes articulées 100 et 102.

La tige 96 du vérin est fixée à son extrémité 96a non solidaire du corps 94 à la structure fixe de la paroi de la nacelle.

Ainsi, lorsque la commande de rétractation de la partie intermédiaire de la paroi 80 active la rétractation du vérin 92, le corps 94 de ce dernier est ramené vers l'amont à l'intérieur du logement 84 suivant un déplacement longitudinal représenté sur la figure 7B. La tête 94a du corps du vérin traverse la cavité 98 pour venir en butée par l'intermédiaire d'épaulement sur les bords de l'ouverture de ladite cavité, tandis que les biellettes articulées 100 et 102 suivent l'extrémité 94b du corps en s'inclinant.

Il s'ensuit que les panneaux 86 et 88 se rapprochent du corps 94 et donc l'un de l'autre.

Leur écartement ayant diminué (figure 7B), il est devenu inférieur à celui des panneaux de la partie amont de paroi 82a qui délimite le logement interne 84.

Le vérin étant toujours actionné, le corps 94 de ce dernier est ramené vers l'amont à l'intérieur de la partie amont de paroi 82a (figure 7C), emmenant ainsi avec lui le bloc de paroi articulé 80.

On notera que ce bloc intermédiaire de paroi est ainsi doublement rétractable puisqu'il peut se rétracter longitudinalement, de même que radialement, les panneaux 86 et 88 étant en effet susceptibles de se rapprocher l'un de l'autre lors de la rétractation.

La rétractation longitudinale permet de créer une ouverture 104 dans la paroi de nacelle entre les éléments fixes de paroi amont 82a et aval 82b afin d'assurer les fonctionnalités présentées lors de la description des modes de réalisation précédents.

En outre, la rétraction radiale ou latérale permet à la partie de paroi intermédiaire d'être logée plus facilement à l'intérieur de la partie amont 82a que la partie intermédiaire de paroi 46 représentée sur les figures 5, 6A et 6B. Il est en effet nécessaire dans le mode de réalisation des figures 5, 6A et 6B que l'écartement entre les panneaux 48 et 50 soit inférieur à l'écartement existant entre les parois définissant le logement interne 62 de la partie amont 44a.

Tout ce qui a été dit précédemment à propos du dispositif fluidique de prélèvement contrôlé d'une partie de l'écoulement interne au conduit 26 reste valable pour la variante représentée sur les figures 7A à 7C.

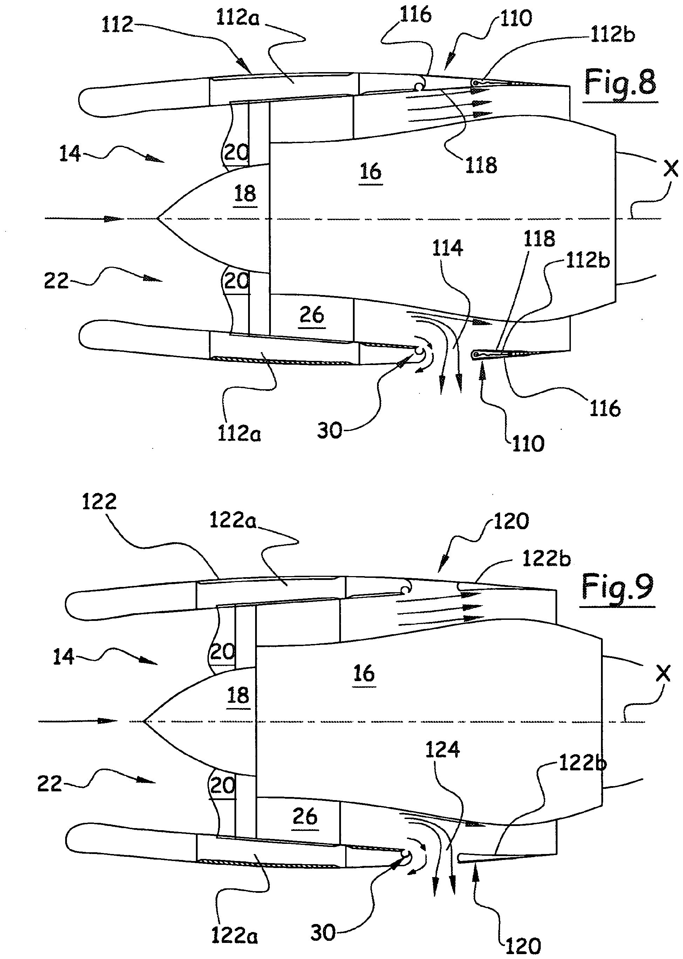

La figure 8 illustre un troisième mode de réalisation d'une nacelle selon l'invention dans laquelle le mécanisme de création d'ouverture comprend une partie de paroi de nacelle déplaçable longitudinalement par translation vers l'aval de la nacelle et non vers l'amont comme sur les figures 5, 6A, 6B, 7A à 7C.

Plus particulièrement, la partie de paroi 110 est mobile entre deux positions, une première représentée en haut de la figure 8, dans laquelle est agencée entre deux parties fixes 112a (partie amont) et 112b (partie aval incluant le bord de fuite de la nacelle) de la paroi de la nacelle 112 et une seconde représentée en bas de cette même figure. Dans cette seconde position, la partie mobile 110 a coulissé vers l'arrière et une ouverture 114 a ainsi été créée dans cette paroi pour permettre la déviation du flux.

On notera que, dans ce mode de réalisation, la partie intermédiaire de paroi 110 comprend deux panneaux radialement écartés l'un de l'autre, dont l'un 116 est en contact avec l'extérieur tandis que l'autre 118 est en contact avec le conduit annulaire 26.

Sous l'action d'un ou de plusieurs vérins non représentés sur la figure, le système 110 à double paroi coulisse vers l'aval, par exemple, en recouvrant en partie la partie fixe de paroi aval 112b.

Les deux panneaux 116 et 118 viennent ainsi, par exemple, recouvrir les faces interne et externe respectives de la partie fixe de paroi 112b.

On notera que le ou les vérins non représentés sont aménagés dans la partie fixe de paroi 112b comme l'étaient les vérins des modes de réalisation des figures 5, 6A, 6B, 7A à 7C dans la partie fixe de paroi amont de la nacelle.

Selon une variante de réalisation non représentée, les deux parois 116 et 118 peuvent également être rétractées radialement afin de réduire l'écartement entre ces dernières en utilisant un ou plusieurs vérins de la façon illustrée sur les figures 7A à 7C.

Les panneaux 116 et 118 de la partie intermédiaire 110 sont alors logés au moins en partie à l'intérieur de la partie aval fixe 112b.

On notera que, dans le mode de réalisation représenté sur la figure 8, le dispositif fluidique 30 n'est pas agencé sur la partie mobile de la paroi de la nacelle comme dans les modes de réalisation représentés aux figures 5, 6A, 6B, 7A à 7B.

En effet, le dispositif 30 est agencé en amont de l'ouverture et la partie de paroi mobile 110 est ici déplacée vers l'aval.

On a représenté sur la figure 9 une variante de réalisation dans laquelle la partie intermédiaire mobile de paroi est également déplacée vers l'arrière de la paroi de la nacelle 122.

La partie intermédiaire de paroi 120 comprend ici un seul panneau qui, dans la première position représentée en partie haute de la figure 9, est agencée entre les deux parties fixes amont 122a et aval 122b de la paroi de la nacelle. Dans la seconde position représentée en partie basse de cette figure, la partie mobile 120 se déplace par translation vers l'aval et recouvre au moins partiellement la face externe de la partie fixe 122b.

On notera d'ailleurs que la partie fixe aval 122b est décalée radialement vers l'intérieur de la nacelle par rapport à la position radiale du panneau de la partie mobile 120 afin que ce dernier puisse translater longitudinalement sans heurter la partie fixe 122b.

Là encore, la partie intermédiaire mobile de la paroi de la nacelle permet de créer une ouverture 124 dans cette dernière afin de dévier de façon contrôlée une partie de l'écoulement de fluide interne au conduit annulaire 26.

Le dispositif fluidique de prélèvement 30 est également agencé de façon indépendante de la partie de paroi mobile et de manière fixe par rapport à cette dernière, contrairement à l'agencement prévu sur les figures 5, 6A, 6B, 7A à 7C. Il convient de noter que les parois intermédiaires mobiles 110 et 120 peuvent s'étendre de façon annulaire sur toute la périphérie de la nacelle ou seulement sur un ou plusieurs segments annulaires de celle-ci.

Par ailleurs, on remarquera que dans tous les cas, la partie arrière de la paroi de la nacelle ne se translatant pas, il est préférable de prélever, au conduit annulaire, au moins 20 à 30% de l'écoulement interne pour obtenir un effet significatif sur l'inversion, l'annulation ou la diminution de poussée via le prélèvement contrôlé.

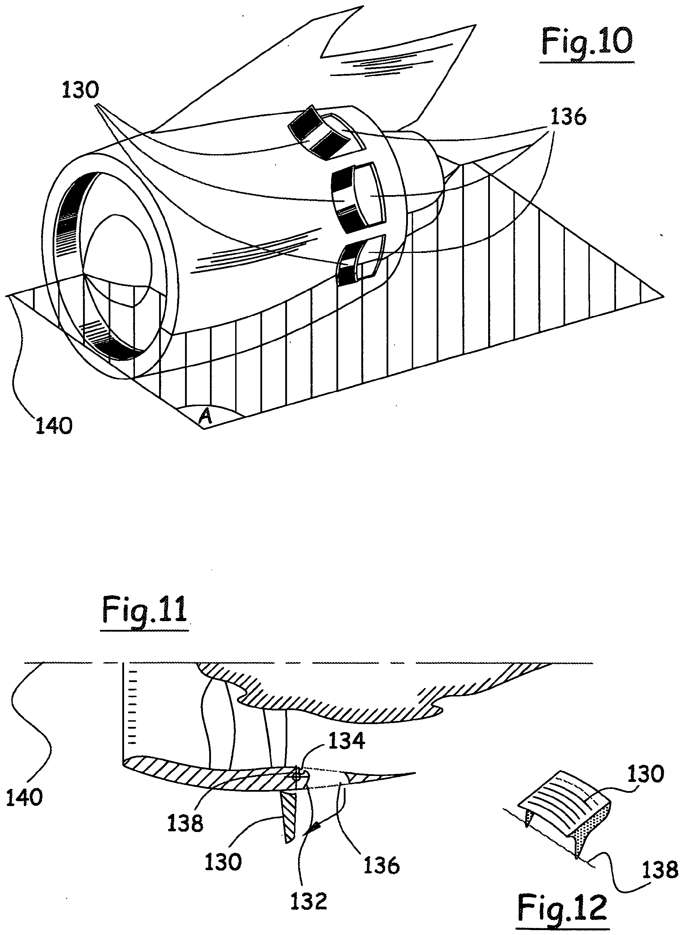

Sur les figures 10 à 14, on a représenté des variantes comportant des dispositifs complémentaires au dispositif d'inversion de poussée de type fluidique précédemment décrit visant à améliorer son efficacité.

Selon un mode de réalisation illustré sur les figures 10 à 12, un ou plusieurs volets 130 sont rapportés en amont d'un bord de fuite 132 au niveau duquel est placé un dispositif fluidique 134 permettant de dévier de manière pneumatique au moins une partie du flux susceptible de participer à la poussée afin d'obtenir une décélération de l'aéronef.

Selon ce mode de réalisation, la nacelle comprend au moins une ouverture 136 susceptible d'être obturée par un volet 130 de forme adaptée à l'ouverture 136, ledit volet étant articulé par rapport à la nacelle selon un axe 138 de pivotement disposé en amont de l'ouverture dans un plan sensiblement perpendiculaire à l'axe 140 longitudinal de la nacelle correspondant à l'axe de la poussée. Ainsi, le volet 130 peut occuper une première position dans laquelle il obture l'ouverture 136 et une deuxième position dans laquelle il dégage l'ouverture 136 autorisant la déviation d'au moins une partie du flux secondaire grâce au dispositif fluidique 134.

Avantageusement, les formes du volet sont telles qu'elles assurent la continuité de la surface extérieure et du conduit intérieur de la nacelle.

Avantageusement, la nacelle peut comprendre une pluralité d'ouvertures 136 réparties sur sa circonférence, chacune susceptible d'être obturée par un volet 130.

La présence en amont de l'ouverture 136 d'un volet 130 permet de créer en aval du volet 130 une dépression et une perturbation aérodynamique au niveau de l'ouverture qui favorisent l'aspiration d'au moins une partie du flux secondaire et améliore l'efficacité du dispositif fluidique 134.

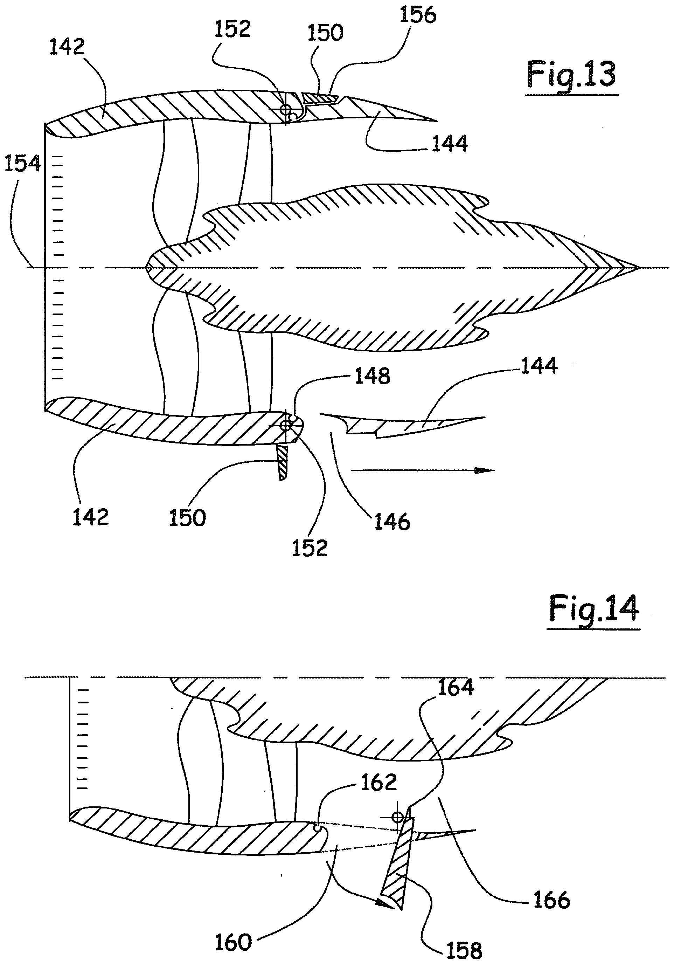

Selon une autre variante illustrée sur la figure 13, la nacelle comprend deux parties, une partie amont 142 fixe et une partie aval 144 mobile en translation permettant de créer une ouverture 146, le bord de fuite de la partie amont comportant un dispositif fluidique 148. Cette nacelle est sensiblement identique à celle illustrée sur la figure 3.

Au moins un volet 150 peut être prévu à l'extérieur de la nacelle, en amont de l'ouverture 146, articulé par rapport à un axe 152 en amont de ladite ouverture, disposé dans un plan sensiblement perpendiculaire à l'axe 154 longitudinal de la nacelle. Ce volet 150 peut occuper une première position dite repliée dans laquelle sa surface extérieure 156 assure la continuité de la surface extérieure aérodynamique de la nacelle et une deuxième position dite déployée dans laquelle il vient en saillie par rapport à la surface extérieure de la nacelle afin d'améliorer l'efficacité du dispositif fluidique 148 en créant une dépression et une perturbation au niveau de l'ouverture 146.

Généralement, la nacelle comprend plusieurs volets 150 rapportés en amont de la ou des ouvertures 146.

Selon d'autres variantes dont une est illustrée sur la figure 14, un ou plusieurs volets 158 peuvent être articulés par rapport au bord aval d'une ouverture 160 et se déployer en aval de ladite ouverture 160. Ce ou ces volets permettent d'améliorer l'efficacité d'un dispositif fluidique 162 placé au niveau du bord amont de l'ouverture 160 grâce aux perturbations aérodynamiques qu'ils génèrent au niveau de ladite ouverture 160.

Comme illustré sur la figure 14, le ou les volets 158 peuvent comprendre un bord 164 susceptible de venir en saillie à l'intérieur du conduit secondaire 166 de manière plus ou moins importante.

## Revendications

1. Procédé visant à réduire, annuler ou inverser la poussée générée par au moins un flux d'air pénétrant à l'intérieur d'une nacelle (12) d'un ensemble propulsif d'un aéronef, canalisé à l'intérieur de ladite nacelle, puis sortant de ladite nacelle, en déviant au moins une partie (F'i) du flux (Fi) susceptible de participer à la poussée, consistant à injecter au niveau de l'ensemble propulsif un fluide appelé fluide d'inversion de poussée pour dévier par un effet d'entraînement au moins une partie (F'i) du flux (Fi) susceptible de participer à la poussée, **caractérisé en ce que** le fluide d'inversion de poussée est injecté depuis l'intérieur de la nacelle (12) en direction de l'extérieur de la nacelle (12).

2. Procédé selon la revendication 1, **caractérisé en ce qu'**il consiste à i injecter un fluide d'inversion de poussée au niveau ou légèrement en amont d'au moins une partie d'un bord de fuite (24b) d'au moins un conduit (26) canalisant le flux susceptible de participer à la poussée ou d'une ouverture (28) ménagée au niveau dudit conduit.

3. Procédé selon la revendication 1 ou 2, **caractérisé en ce qu'**il consiste à ajuster au moins un paramètre aérodynamique ou thermodynamique du fluide d'inversion de poussée pour ajuster le ratio entre le flux dévié et le flux non dévié.

4. Procédé selon l'une des revendications 1 à 3, **caractérisé en ce qu'**il consiste à injecter le fluide d'inversion de poussée en amont d'une surface courbe convexe (24a) avec une partie sommitale décalée vers l'arrière par rapport à la sortie du fluide d'inversion de poussée.

5. Procédé selon la revendication 4, **caractérisé en ce qu'**il consiste à ajuster au moins un paramètre aérodynamique ou thermodynamique du fluide d'inversion de poussée pour régler l'orientation du flux dévié.

6. Procédé selon l'une quelconque des revendications précédentes, **caractérisé en ce qu'**il consiste à dévier au moins une partie du flux susceptible de participer à la poussée via une ouverture (28) temporaire susceptible d'être créée au niveau d'un conduit canalisant le flux à dévier et à injecter le fluide d'inversion de poussée au niveau ou légèrement en amont d'au moins une partie du bord de fuite amont de ladite ouverture (28).

7. Procédé selon la revendication 6, **caractérisé en ce qu'**il consiste à générer des perturbations aérodynamiques au niveau de l'ouverture.

8. Dispositif pour la mise en oeuvre du procédé selon l'une quelconque des revendications précédentes, visant à réduire, annuler ou inverser la poussée générée par au moins un flux d'air pénétrant à l'intérieur d'une nacelle d'un ensemble propulsif d'un aéronef canalisé à l'intérieur de ladite nacelle, et sortant de ladite nacelle, le dispositif comprenant des moyens pour dévier au moins une partie (F'i) du flux (Fi) susceptible de participer à la poussée, le dispositif comprenant des moyens pour injecter au niveau de l'ensemble propulsif un fluide appelé fluide d'inversion de poussée pour dévier par un effet d'entraînement au moins une partie (F'i) du flux (Fi) susceptible de participer à la poussée, **caractérisé en ce que** le fluide d'inversion de poussée est injecté depuis l'intérieur de la nacelle (12) en direction de l'extérieur de la nacelle (12).

9. Dispositif selon la revendication 8, **caractérisé en ce que** les moyens pour injecter le fluide d'inversion de poussée sont disposés au niveau ou légèrement en amont d'au moins une partie d'un bord de fuite (24b) d'au moins un conduit (26) canalisant le flux susceptible de participer à la poussée ou d'une ouverture (28) ménagée au niveau dudit conduit.

10. Dispositif selon la revendication 9, **caractérisé en ce qu'**il comprend une surface courbe convexe prévue au niveau du bord de fuite et une sortie de fluide d'inversion de poussée placée sensiblement au niveau de l'intersection de ladite surface courbe et de la surface intérieure du conduit (26) canalisant le flux à dévier, la surface courbe comprenant une partie sommitale décalée vers l'arrière par rapport à la sortie du fluide d'inversion de poussée.

11. Dispositif selon l'une quelconque des revendications 8 à 10, **caractérisé en ce que** la sortie du fluide d'inversion de poussée a une forme en tuyère.

12. Dispositif selon l'une des revendications 8 à 11, **caractérisé en ce qu'**il comprend des moyens pour ajuster au moins un paramètre aérodynamique ou thermodynamique du fluide d'inversion de poussée.

13. Nacelle d'aéronef comprenant un dispositif selon l'une quelconque des revendications 8 à 12.

14. Nacelle d'aéronef selon la revendication 13, comprenant un conduit (24) dans lequel est disposé de manière concentrique une turbomachine (16), **caractérisée en ce qu'**elle comprend au moins une ouverture temporaire (28), permettant de faire communiquer l'intérieur et l'extérieur d'un conduit canalisant le flux à dévier et un dispositif selon l'une quelconque des revendications 8 et 12 disposé au moins en partie au niveau du bord de fuite amont de ladite ouverture.

15. Nacelle d'aéronef selon la revendication 14, **caractérisée en ce que** l'ouverture comprend au niveau de son bord amont une surface fourbe convexe et une sortie de fluide d'inversion de poussée placée sensiblement au niveau de l'intersection de ladite surface courbe convexe et de la surface intérieure du conduit canalisant le flux à dévier, la surface courbe convexe comprenant une partie sommitale décalée vers l'arrière par rapport à la sortie du fluide d'inversion de poussée.

16. Nacelle d'aéronef selon l'une des revendications 13 à 15, **caractérisée en ce que** la sortie du fluide d'inversion de poussée a une forme en tuyère.

17. Nacelle d'aéronef selon l'une quelconque des revendications 13 à 16, **caractérisée en ce qu'**elle comprend au moins un volet (130) permettant de perturber le flux aérodynamique au niveau de l'ouverture.

18. Nacelle d'aéronef selon la revendication 17, **caractérisée en ce que** ledit au moins un volet (130) est disposé en amont de l'ouverture.

19. Nacelle d'aéronef selon la revendication 17, **caractérisée en ce que** ledit au moins un volet (130) est disposé en aval de l'ouverture.

20. Nacelle d'aéronef selon l'une quelconque des revendications 17 à 19, **caractérisée en ce que** ledit au moins un volet (130) est susceptible d'occuper une première position dans laquelle sa surface extérieure est dans le prolongement de la surface extérieure de la nacelle et une deuxième position dans laquelle il est en saillie par rapport à la surface extérieure de la nacelle (12).

21. Nacelle d'aéronef selon l'une des revendications 13 à 20, **caractérisée en ce qu'**elle comprend au moins une ouverture (136) susceptible d'être obturée par au moins un volet (130), ledit au moins un volet (130) étant susceptible d'occuper une première position dans laquelle il obture l'ouverture et une seconde position dans laquelle il dégage l'ouverture.

22. Nacelle d'aéronef selon l'une quelconque des revendications 13 à 20, **caractérisée en ce qu'**elle comprend au moins une partie fixe (24a) et au moins une partie mobile (24b) susceptible de se translater par rapport à ladite au moins une partie fixe afin de créer au moins une ouverture (28) après translation.

23. Nacelle d'aéronef selon la revendication 22, **caractérisée en ce qu'**elle comprend une partie fixe amont et au moins une partie mobile aval permettant de créer au moins une ouverture entre les parties amont et aval après translation de ladite au moins une partie mobile aval,

24. Nacelle d'aéronef selon la revendication 23, **caractérisée en ce qu'**elle comprend au moins un panneau (58, 60) susceptible de se translater par rapport à la paroi de la nacelle afin de dégager une ouverture ménagée dans la paroi de la nacelle (12).

25. Aéronef comprenant au moins une nacelle (12) selon l'une quelconque des revendications 13 à 24.

## Patentansprüche

1. Verfahren zur Verringerung, Unterdrückung oder Umkehr einer Schubkraft, die durch wenigstens eine Luftströmung erzeugt wird, die in das Innere einer Gondel (12) einer Antriebseinheit eines Luftfahrzeugs eindringt, im Inneren der Gondel kanalisiert wird und die Gondel verlässt, indem wenigstens ein Teil (F'i) der Strömung (Fi), die sich dazu eignet, zur Schubkraft beizutragen, abgeleitet wird, wobei das Verfahren darin besteht, dass im Bereich der Antriebseinheit ein Fluid injiziert wird, das als Schubumkehrfluid bezeichnet wird, um durch einen Mitnahmeeffekt wenigstens einen Teil (F'i) der Strömung (Fi), die sich dazu eignet, zur Schubkraft beizutragen, abzuleiten, **dadurch gekennzeichnet, dass** das Schubumkehrfluid vom Inneren der Gondel (12) aus in Richtung des Äußeren der Gondel (12) injiziert wird.

2. Verfahren nach Anspruch 1, **dadurch gekennzeichnet, dass** dieses darin besteht, ein Schubumkehrfluid im Bereich oder in Strömungsrichtung kurz vor wenigstens einem Teil einer Hinterkante (24b) wenigstens eines Kanals (26) zu injizieren, der die Strömung, die sich dazu eignet, zur Schubkraft beizutragen, kanalisiert, oder kurz vor einer Öffnung (28), die im Bereich des Kanals ausgebildet ist.

3. Verfahren nach Anspruch 1 oder 2, **dadurch gekennzeichnet, dass** dieses darin besteht, wenigstens einen aerodynamischen oder thermodynamischen Parameter des Schubumkehrfluids einzustellen, um das Verhältnis zwischen der abgeleiteten Strömung und der nicht abgeleiteten Strömung einzustellen.

4. Verfahren nach einem der Ansprüche 1 bis 3, **dadurch gekennzeichnet, dass** dieses darin besteht, das Schubumkehrfluid in Strömungsrichtung vor einer konvexen gekrümmten Oberfläche (24a) zu injizieren, die einen bezüglich des Auslasses des Schubumkehrfluids nach hinten versetzten Scheitelpunkt aufweist.

5. Verfahren nach Anspruch 4, **dadurch gekennzeichnet, dass** dieses darin besteht, wenigstens einen aerodynamischen oder thermodynamischen Parameter des Schubumkehrfluids einzustellen, um die Ausrichtung der abgeleiteten Strömung zu steuern.

6. Verfahren nach einem der vorhergehenden Ansprüche, **dadurch gekennzeichnet, dass** dieses darin besteht, wenigstens einen Teil der Strömung, der dazu geeignet ist, zur Schubkraft beizutragen, mittels einer zeitweiligen Öffnung (28) abzuleiten, die dazu geeignet ist, im Bereich eines Kanals erzeugt zu werden, der die abzuleitende Strömung kanalisiert, und das Schubumkehrfluid im Bereich oder in Strömungsrichtung kurz vor einem Teil der in Strömungsvorrichtung vor der Öffnung (28) gelegenen Hinterkante zu injizieren.

7. Verfahren nach Anspruch 6, **dadurch gekennzeichnet, dass** dieses darin besteht, im Bereich der Öffnung aerodynamische Störungen zu erzeugen.

8. Vorrichtung für die Ausführung des Verfahrens nach einem der vorhergehenden Ansprüche zur Verringerung, Unterdrückung oder Umkehr einer Schubkraft, die durch wenigstens eine Luftströmung erzeugt wird, die in das Innere einer Gondel einer Antriebseinheit eines Luftfahrzeugs eindringt, die im Inneren der Gondel kanalisiert wird und die Gondel verlässt, wobei die Vorrichtung Mittel aufweist, um wenigstens einen Teil (F'i) der Strömung (Fi) abzuleiten, die dazu geeignet ist, zur Schubkraft beizutragen, und Mittel aufweist, um im Bereich der Antriebseinheit ein Fluid zu injizieren, das als Schubumkehrfluid bezeichnet wird, um durch einen Mitnahmeeffekt wenigstens einen Teil (F'i) der Strömung (Fi) abzuleiten, die dazu geeignet ist, zur Schubkraft beizutragen, **dadurch gekennzeichnet, dass** das Schubumkehrfluid aus dem Inneren der Gondel (12) in Richtung des Äußeren der Gondel (12) injiziert wird.

9. Vorrichtung nach Anspruch 8, **dadurch gekennzeichnet, dass** die Mittel zum Injizieren des Schubumkehrfluids im Bereich oder in Strömungsrichtung kurz vor wenigstens einem Teil einer Hinterkante (24b) wenigstens eines Kanals (26) angeordnet sind, der die Strömung kanalisiert, die dazu geeignet ist, zur Schubkraft beizutragen, oder kurz vor einer Öffnung (28), die im Bereich des Kanals ausgebildet ist.

10. Vorrichtung nach Anspruch 9, **dadurch gekennzeichnet, dass** diese eine konvexe gekrümmte Oberfläche aufweist, die im Bereich der Hinterkante vorgesehen ist, und einen Auslass des Schubumkehrfluids aufweist, der im Wesentlichen im Überschneidungsbereich der gekrümmten Oberfläche und der Innenfläche des Kanals (26) angeordnet ist, der die abzuleitende Strömung kanalisiert, wobei die gekrümmte Oberfläche ein Scheitelpunktteil aufweist, das bezüglich des Auslasses des Schubumkehrfluids nach hinten versetzt ist.

11. Vorrichtung nach einem der Ansprüche 8 bis 10, **dadurch gekennzeichnet, dass** der Auslass des Schubumkehrfluids düsenförmig ausgebildet ist.

12. Vorrichtung nach einem der Ansprüche 8 bis 11, **dadurch gekennzeichnet, dass** dieses Mittel aufweist, um wenigstens einen aerodynamischen oder thermodynamischen Parameter des Schubumkehrfluids einzustellen.

13. Gondel eines Luftfahrzeugs mit einer Vorrichtung nach einem der Ansprüche 8 bis 12.

14. Gondel eines Luftfahrzeugs nach Anspruch 13, mit einem Kanal (24), in dem auf konzentrische Weise eine Turbomaschine (16) angeordnet ist, **dadurch gekennzeichnet, dass** diese wenigstens eine zeitweilige Öffnung (28) aufweist, die es gestattet, das Innere und das Äußere eines die abzuleitende Strömung kanalisierenden Kanals in Verbindung treten zu lassen, und eine Vorrichtung nach einem der Ansprüche 8 und 12 aufweist, die wenigstens teilweise im Bereich der in Strömungsrichtung vor der Öffnung gelegenen Hinterkante angeordnet ist.

15. Gondel eines Luftfahrzeugs nach Anspruch 14, **dadurch gekennzeichnet, dass** die Öffnung im Bereich ihres stromaufwärts gelegenen Randes eine konvexe gekrümmte Oberfläche und einen Auslass des Schubumkehrfluids aufweist, das im Wesentlichen im Überschneidungsbereich der konvexen gekrümmten Oberfläche und der Innenfläche des Kanals angeordnet ist, der die abzuleitende Strömung kanalisiert, wobei die konvexe gekrümmte Oberfläche ein Scheitelpunktteil aufweist, das bezüglich des Auslasses des Schubumkehrfluids nach hinten versetzt ist.

16. Gondel eines Luftfahrzeugs nach einem der Ansprüche 13 bis 15, **dadurch gekennzeichnet, dass** der Auslass des Schubumkehrfluids düsenförmig ausgebildet ist.

17. Gondel eines Luftfahrzeugs nach einem der Ansprüche 13 bis 16, **dadurch gekennzeichnet, dass** diese wenigstens eine Klappe (130) aufweist, die es gestattet, die aerodynamische Strömung im Bereich der Öffnung zu stören.

18. Gondel eines Luftfahrzeugs nach Anspruch 17, **dadurch gekennzeichnet, dass** die wenigstens eine Klappe (130) in Strömungsrichtung vor der Öffnung angeordnet ist.

19. Gondel eines Luftfahrzeugs nach Anspruch 17, **dadurch gekennzeichnet, dass** die wenigstens eine Klappe (130) in Strömungsrichtung hinter der Öffnung angeordnet ist.

20. Gondel eines Luftfahrzeugs nach einem der Ansprüche 17 bis 19, **dadurch gekennzeichnet, dass** die wenigstens eine Klappe (130) dazu geeignet ist, eine erste Stellung einzunehmen, in der ihre äußere Oberfläche mit der äußeren Oberfläche der Gondel fluchtet, und eine zweite Stellung, in der sie bezüglich der äußeren Oberfläche der Gondel (12) vorspringt.

21. Gondel eines Luftfahrzeugs nach einem der Ansprüche 13 bis 20, **dadurch gekennzeichnet, dass** diese wenigstens eine Öffnung (136) aufweist, die dazu geeignet ist, durch wenigstens eine Klappe (130) abgedeckt zu werden, wobei die wenigstens eine Klappe (130) dazu geeignet ist, eine erste Stellung einzunehmen, in der sie die Öffnung abdeckt, und eine zweite Stellung, in der sie die Öffnung freigibt.

22. Gondel eines Luftfahrzeugs nach einem der Ansprüche 13 bis 20, **dadurch gekennzeichnet, dass** diese wenigstens ein festes Teil (24a) und wenigstens ein bewegliches Teil (24b) aufweist, das dazu geeignet ist, bezüglich des wenigstens einen festen Teils verschoben zu werden, um nach der Verschiebung wenigstens eine Öffnung (28) zu schaffen.

23. Gondel eines Luftfahrzeugs nach Anspruch 22, **dadurch gekennzeichnet, dass** diese einen stromaufwärts gelegenen festen Teil und einen stromabwärts gelegenen, beweglichen Teil aufweist, der es gestattet, wenigstens eine Öffnung zwischen dem stromaufwärts gelegenen Teil und dem stromabwärts gelegenen Teil nach dem Verschieben des wenigstens einen stromabwärts gelegenen, beweglichen Teils zu schaffen.

24. Gondel eines Luftfahrzeugs nach Anspruch 23, **dadurch gekennzeichnet, dass** diese wenigstens eine Platte (58, 60) aufweist, die dazu geeignet ist, bezüglich der Wand der Gondel verschoben zu werden, um eine in der Wand der Gondel (12) ausgebildete Öffnung freizugeben.

25. Luftfahrzeug mit wenigstens einer Gondel (12) nach einem der Ansprüche 13 bis 24.

## Claims

1. Process whose purpose is to reduce, cancel or reverse the thrust generated by at least one air flow penetrating inside a nacelle (12) of a propulsion unit of an aircraft, channeled inside said nacelle, and then exiting from said nacelle, by deflecting at least a portion (F'i) of the flow (Fi) that can assist the thrust, consisting in injecting at the propulsion unit a fluid called a thrust reversal fluid for deflecting by a driving effect at least a portion (F'i) of the flux (Fi) that can assist the thrust, **characterized in that** the thrust reversal fluid is injected from the inside of the nacelle (12) toward the outside of the nacelle (12).

2. Process according to Claim 1, wherein it consists in injecting a thrust reversal fluid at or slightly upstream from at least a portion of a trailing edge (24b) of at least one conduit (26) that channels the flow that can assist the thrust or an opening (28) that is located at the level of said conduit.

3. Process according to Claim 1 or 2, wherein it consists in adjusting at least one aerodynamic or thermodynamic parameter of thrust reversal fluid to adjust the ratio between the deflected flow and the non-deflected flow.

4. Process according to any of Claims 1 to 3, wherein it consists in injecting the thrust reversal fluid upstream from a convex, curved surface (24a) with a top part that is offset toward the rear relative to the discharge of the thrust reversal fluid.

5. Process according to Claim 4, wherein it consists in adjusting at least one aerodynamic or thermodynamic parameter of the thrust reversal fluid to regulate the orientation of the deflected flow.

6. Process according to any of the preceding claims, wherein it consists in deflecting at least a portion of the flow that can assist the thrust via a temporary opening (28) that can be created at the level of a conduit that channels the flow to be deflected and to inject the thrust reversal fluid at or slightly upstream from at least a portion of the trailing edge upstream from said opening (28).

7. Process according to Claim 6, wherein it consists in generating aerodynamic disturbances at the opening.

8. Device for the implementation of a process according to any of the preceding claims for reducing, canceling or reversing the thrust generated by at least one air flow penetrating inside a nacelle (12) of a propulsion unit of an aircraft, channeled inside said nacelle, and then exiting from said nacelle, comprising means for deflecting at least a portion (F'i) of the flow (Fi) that can assist the thrust, the device comprising means for injecting at the propulsion unit a fluid called a thrust reversal fluid for deflecting by a driving effect at least a portion (F'i) of the flux (Fi) that can assist the thrust, **characterized in that** the thrust reversal fluid is injected from the inside of the nacelle (12) toward the outside of the nacelle (12).

9. Device according to Claim 8, wherein the means for injecting a thrust reversal fluid at or slightly upstream from at least a portion of a trailing edge (24b) of at least one conduit (26) that channels the flow that can assist the thrust or an opening (28) that is located at the level of said conduit.

10. Device according to Claim 9, wherein it comprises a convex, curved surface that is provided along the trailing edge and a thrust reversal fluid discharge that is arranged essentially at the intersection of said curved surface and the inside surface of the conduit (26) that channels the flow to be deflected, whereby the curved surface comprises a top part that is offset toward the rear relative to the discharge of the thrust reversal fluid.

11. Device according to Claim 8, wherein the discharge of the thrust reversal fluid has a nozzle shape.

12. Device according to any of Claims 8 to 11, wherein it comprises means for adjusting at least one aerodynamic or thermodynamic parameter of the thrust reversal fluid.

13. Aircraft nacelle comprising a device according to any Claims 8 to 12.

14. Aircraft nacelle according to Claim 13, comprising a conduit (24) in which a gas turbine engine (16) is arranged concentrically, wherein it comprises at least one temporary opening (28), making it possible to merge the inside and the outside of a conduit that channels the flow to be deflected and a device according to any of claims 8 and 12 that is arranged at least partially at the trailing edge upstream from said opening.

15. Aircraft nacelle according to Claim 14, wherein at its upstream edge, the opening comprises a convex, curved surface and a thrust reversal fluid discharge that is arranged essentially at the intersection of said convex, curved surface and the inside surface of the conduit that channels the flow to be deflected, whereby the convex, curved surface comprises a top part that is offset toward the rear relative to the discharge of the thrust reversal fluid.

16. Aircraft nacelle according to any of Claims 13 to 15, wherein the discharge of the thrust reversal fluid has a nozzle shape.

17. Aircraft nacelle according to any of Claims 13 to 16, wherein it comprises at least one flap (130) that makes it possible to disturb the aerodynamic flow at the opening.

18. Aircraft nacelle according to Claim 17, wherein said at least one flap (130) is arranged upstream from the opening.

19. Aircraft nacelle according to Claim 17, wherein said at least one flap (130) is arranged downstream from the opening.

20. Aircraft nacelle according to any of Claims 17 to 19, wherein said at least one flap (130) is able to occupy a first position in which its outside surface is in the extension of the outside surface of the nacelle, and a second position in which it projects relative to the outside surface of the nacelle (12).

21. Aircraft nacelle according to any of Claims 13 to 20, wherein it comprises at least one opening (136) that can be sealed by at least one flap (130), whereby said at least one flap (130) is able to occupy a first position in which it seals the opening and a second position in which it releases the opening.

22. Aircraft nacelle according to any of Claims 13 to 20, wherein it comprises at least one stationary part (24a) and at least one moving part (24b) that can move in translation relative to said at least one stationary part so as to create at least one opening (28) after movement in translation.

23. Aircraft nacelle according to Claim 22, wherein it comprises an upstream stationary part and at least one downstream moving part that make it possible to create at least one opening between the upstream and downstream parts after movement in translation of said at least one downstream moving part.

24. Aircraft nacelle according to Claim 23, wherein it comprises at least one panel (58, 60) that can move in translation relative to the wall of the nacelle so as to release an opening that is made in the wall of the nacelle (12).

25. Aircraft that comprises at least one nacelle (12) according to any of Claims 13 to 24.
